Europäisches Patentamt

(19) European Patent Office

Office européen des brevets

(11) Numéro de publication: **0 122 170**
**B1**

(12) # FASCICULE DE BREVET EUROPEEN

(45) Date de publication du fascicule du brevet:
04.06.86

(51) Int. Cl.⁴: **B 60 T 13/24**

(21) Numéro de dépôt: **84400457.2**

(22) Date de dépôt: **07.03.84**

(54) **Dispositif d'actionnement commandé par une pression de fluide notamment servomoteur d'assistance au freinage.**

(30) Priorité: **11.03.83 FR 8304043**

(43) Date de publication de la demande:
**17.10.84 Bulletin 84/42**

(45) Mention de la délivrance du brevet:
**04.06.86 Bulletin 86/23**

(84) Etats contractants désignés:
**DE GB IT SE**

(56) Documents cités:
**FR - A - 1 052 891**
**FR - A - 1 220 462**
**FR - A - 1 290 028**
**GB - A - 2 051 987**
**US - A - 2 275 697**
**US - A - 3 101 742**
**US - A - 3 126 794**

(73) Titulaire: **BENDIX France, 126, rue de Stalingrad, F-93700 Drancy (FR)**

(72) Inventeur: **Tanguy, Christian, 34 bis avenue Gaston Bourry, F-95740 Frepillon (FR)**

(74) Mandataire: **Le Moenner, Gabriel et al, SERVICE BREVETS BENDIX 44, Rue François 1er, F-75008 Paris (FR)**

### Description

La présente invention concerne les dispositifs d'actionnement commandés par une pression de fluide, et plus particulièrement les dispositifs d'assistance ou d'amplification de transmission de forces, notamment d'assistance au freinage pour système de freinage de véhicules automobiles.

La présente invention concerne plus spécifiquement un dispositif d'actionnement commandé par une pression de fluide, notamment un servomoteur d'assistance au freinage, comprenant un boîtier définissant une cavité intérieure divisée en une première et une seconde chambre par une structure de paroi mobile formant piston, couplée à un organe de sortie et renfermant un moyen de valve de commande actionné de l'extérieur par un organe d'entrée pour créer sélectivement une pression différentielle d'actionnement entre les deux chambres et déplacer ainsi la structure de paroi mobile à partir d'une position de repos, un conduit flexible d'amenée de fluide au moyen de valve relié à une source de fluide sous pression et disposé dans une desdites chambres, et un ressort de rappel à boudin sollicitant la structure de paroi mobile vers sa position de repos.

Il existe différents types de dispositifs d'actionnement commandés par une pression de fluide dont relève la présente invention, notamment d'assistance au freinage.

On peut ainsi distinguer les dispositifs du type «à remplissage complet» sous haute pression au repos, le moyen de valve de commande réalisant, en actionnement, une détente d'une des chambres pour la création de ladite pression différentielle d'actionnement. Des dispositifs (pneumatiques) de ce type sont décrits dans les brevets US 3 126 794 et GB 2 051 987. Ces dispositifs présentent l'inconvénient que l'ensemble du boîtier est soumis en permanence à une forte surpression et doit être dimensionné et étanchéifié en conséquence.

On peut distinguer également les dispositifs du type dans lequel le fluide sous pression est admis latéralement, à la périphérie du piston, en limitant ainsi les zones soumises en permanence à la forte pression. Un tel dispositif (hydraulique) est décrit dans le brevet US 3 101 742. Ces dispositifs présentent toutefois l'inconvénient de faire travailler en permanence sous cisaillement et forte pression les deux joints coulissants d'étanchéité du piston dans son alésage.

On peut distinguer enfin les dispositifs du type «à vide complet» dans lesquels, au repos, les deux chambres se trouvent soumises à la basse pression (vide ou, plus généralement, atmosphère), le moyen de valve de commande introduisant, dans l'une des chambres ou chambre de travail, le fluide sous pression (air atmosphérique ou, plus généralement, air comprimé) pour créer la susdite pression différentielle d'actionnement. Ce type de dispositif offre l'intérêt que seul un petit volume interne est maintenu en permanence sous la haute pression, mais présente des difficultés pour ce qui est de l'acheminement du fluide moteur sous pression vers le moyen de valve intégré à la structure de paroi mobile, plus particulièrement lorsque le fluide sous pression est de l'air comprimé. A cette dernière fin, il a été proposé, notamment dans les brevets US-A-2 275 697 et FR-A-1 052 891 (correspondant au préambule de la revendication 1), d'aménager, dans une des chambres du boîtier, un conduit flexible d'amenée de fluide sous pression au moyen de valve et susceptible d'être relié, au niveau d'une paroi de ladite chambre, à une source de fluide sous pression.

Comme définie en premier, la présente invention concerne les dispositifs d'actionnement de ce dernier type et a pour objet de proposer un tel dispositif d'actionnement qui soit simplifié, compact, mettant en œuvre un nombre de composants réduit, d'assemblage simplifié, fiable et de faibles coûts de fabrication.

Pour ce faire, selon l'invention, le ressort de rappel de la structure de paroi mobile est constitué d'un tube élastique formant ledit conduit flexible d'amenée de fluide sous pression au moyen de valve.

Selon une autre caractéristique de l'invention, dans un dispositif d'actionnement comprenant une chambre basse pression et une chambre de travail (c'est-à-dire normalement maintenue en basse pression mais alimentée, en actionnement, en fluide sous haute pression), le tube formant ressort de rappel est disposé dans la chambre de basse pression.

D'autres caractéristiques et avantages de la présente invention ressortiront de la description suivante d'un mode de réalisation, donné à titre illustratif mais nullement limitatif, faite en relation avec le dessin annexé, sur lequel:

— la figure représente, en coupe longitudinale, un dispositif d'actionnement commandé par un fluide sous pression conformément à l'invention.

Dans la présente description, par «fluide sous pression» on entend un fluide, hydraulique ou pneumatique, se trouvant en surpression par rapport à une pression de fluide de référence (basse pression), typiquement un fluide en surpression par rapport à la pression atmosphérique mais également la pression atmosphérique elle-même par rapport à un vide de référence fourni, par exemple, au dispositif d'actionnement à partir d'une tubulure d'admission d'un moteur thermique de véhicule ou par une pompe.

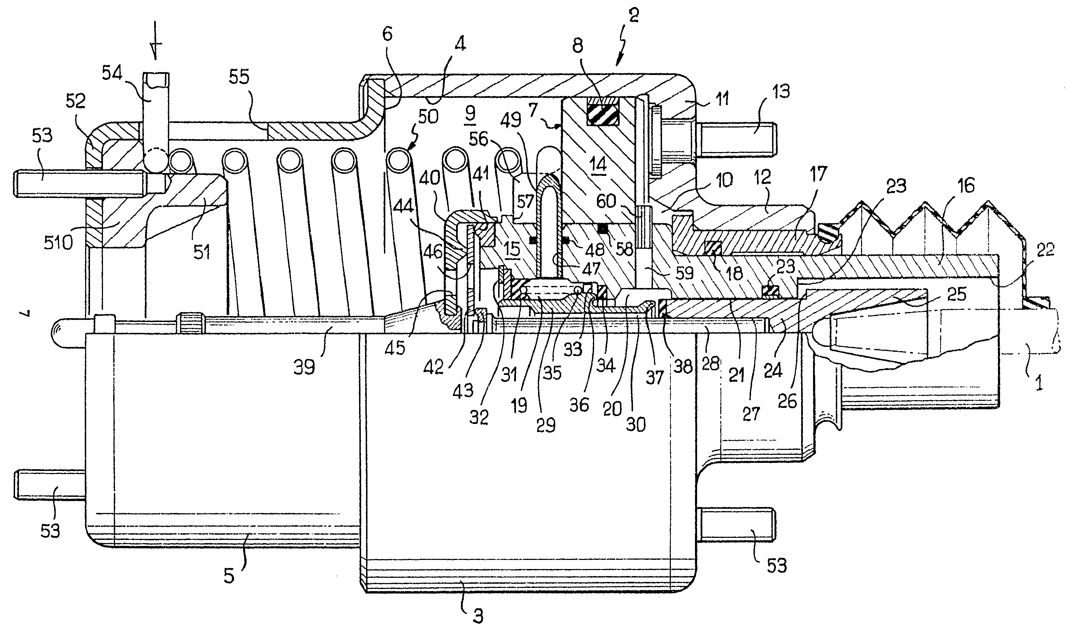

On a représenté sur la figure 1 un servomoteur d'assistance à air comprimé pour système de freinage. Typiquement, ce servomoteur est destiné à être intercalé entre une tige d'actionnement 1, destinée à être couplée à une pédale de frein, et un maître-cylindre (non représenté) de façon à amplifier la force transmise au maître-cylindre en provenance de la tige d'actionnement 1. Dans le mode de réalisation représenté, le dispositif d'actionnement, formant servomoteur d'assistance, comprend un boîtier généralement désigné par la référence 2 et constitué en l'espèce d'une partie de corps principale arrière 3 formée intérieurement avec un alésage axial 4, à l'extrémité avant duquel est sertie une partie de corps avant 5 de diamètre réduit formant ainsi un épaulement intérieur 6 fermant partiellement, vers l'avant, l'alésage 4. Dans cet alésage 4 est montée à coulissement une structure de paroi mobile 7 formant piston étanchéifiée périphériquement par rapport à la paroi de l'alésage 4 par un joint coulissant 8 de façon à diviser la cavité intérieure formée par le boîtier 2 en une première chambre ou chambre avant 9 et une deuxième chambre ou chambre arrière 10. Dans la présente description, les expressions telles que «avant» et «arrière» se rapportent à l'orientation générale du dispositif tel que normalement mis en place dans un véhicule en respectant l'orientation habituellement retenue pour ce véhicule.

Dans le mode de réalisation représenté, la paroi de fond 11 du corps de boîtier 3, délimitant avec la structure de paroi mobile 7 la chambre arrière 10, est prolongée centralement vers l'arrière par une partie cylindrique 12 et est munie d'organes de fixation 13 pour le montage du dispositif sur une paroi fixe, typiquement la paroi pare-feu, d'un véhicule (non représentée). La structure de paroi mobile 7 est constituée d'un élément annulaire 14 enfilé sur un corps de valve central 15 présentant une partie arrière de diamètre réduit 16 coulissant dans une virole 17 montée dans la partie de prolongation tubulaire centrale 12 du corps de boîtier et munie d'un joint coulissant 18. La partie de moyeu centrale formant corps de valve 15 comporte centralement une première cavité avant 19 et une seconde cavité arrière 20 coaxiales, décalées l'une de l'autre axialement, de diamètres différents et communiquant l'une avec l'autre. La seconde cavité 20, de diamètre intérieur réduit, est prolongée vers l'arrière par un alésage coaxial 21, lui-même prolongé vers l'arrière, dans la partie arrière de diamètre réduit 16 du corps de valve 15, par un alésage de diamètre intérieur élargi 22, le raccordement entre les deux alésages 21 et 22 formant un épaulement radial 23. Dans l'alésage 21 est monté à coulissement étanche, au moyen d'un joint 23, un organe pousseur cylindrique 24 présentant une partie de tête élargie arrière 25 formant extérieurement un épaulement radial 26 et définissant intérieurement une cavité de réception de l'extrémité de la tige d'actionnement 1. Le pousseur 24 est lui-même pourvu d'un alésage central borgne 27 dans lequel est reçue l'extrémité arrière d'une tige de poussée 28.

Dans les cavités 19 et 20 est disposé à coulissement un plongeur tubulaire 29 pourvu d'un alésage central 30 dans lequel s'étend la partie avant de la tige de poussée 28 qui se prolonge axialement, vers l'avant, au-delà de l'extrémité avant du plongeur 29. L'extrémité avant du plongeur 29 est guidée à coulissement étanche dans la cavité 19 par un joint armé 31, délimitant vers l'avant la cavité 19 et maintenu par une rondelle 32 dans le corps de valve 15, et par des ailettes radiales périphériques 33. Au niveau du décrochement formant épaulement entre les deux cavités 19 et 20 est ménagé un siège de clapet annulaire 34 en matériau élastomère contre lequel porte normalement, sous l'effet d'un ressort 35 disposé dans la cavité 19 entre le joint 31 et les ailettes 33, un bourrelet annulaire formant un premier moyen de clapet 36 du plongeur 29. L'extrémité arrière du plongeur 29 forme similairement un second moyen de clapet annulaire 37 destiné à coopérer, dans la cavité 20, avec un siège de clapet 38 constitué par un anneau de matériau élastomère monté à l'extrémité avant de l'organe pousseur 24, lequel est dimensionné axialement de façon que son extrémité avant se situe en permanence dans la seconde cavité 20.

Dans le mode de réalisation représenté, il est prévu, entre l'organe ou tige de sortie 39 du dispositif, destiné à solliciter le piston primaire d'un maître-cylindre connecté à l'extrémité avant du boîtier 2, et l'extrémité avant du corps de valve 15, un dispositif de réaction constitué comme suit: l'extrémité arrière de la tige de sortie 39 est rendue solidaire d'un organe en forme de coupelle 40 engagé sur la périphérie de l'extrémité avant du corps de valve 15. Cette périphérie de l'extrémité avant du corps de valve 15 est formée par un insert annulaire définissant un bossage d'appui annulaire périphérique 41 pour un disque ou des bras de réaction métalliques 42 dont les extrémités ou la zone centrales portent contre un organe de butée annulaire 43 monté à l'extrémité avant de la tige de poussée. Le disque (ou les bras radiaux 42) peuvent porter par contre, sur leur face avant (à l'opposé des appuis arrière 41 et 43), contre une butée annulaire 44 formée sur la face interne de la coupelle 40 et ayant un rayon intermédiaire entre ceux des butées annulaires 41 et 43, au voisinage de la butée annulaire périphérique 41. La coupelle 40 est pourvue d'orifices traversants 45, le disque 42 comportant lui aussi des orifices traversants 46.

Comme on le voit sur le dessin, conformément à l'invention, la première cavité 19 de diamètre élargi communique radialement avec l'extrémité du corps de valve 15 par un alésage radial 47 dans lequel est montée de façon étanche, au moyen d'un joint 48, l'extrémité 49 redressée de façon à s'étendre radialement de la dernière spire arrière d'un tube 50, par exemple en acier inoxydable, conformé à la façon d'un ressort hélicoïdal, et dont la spire d'extrémité opposée (avant) prend appui sur un support annulaire 510 rapporté sur la face intérieure de la paroi frontale annulaire avant 52 du corps de boîtier avant 5 et dans lequel sont montés les organes 53 de fixation de la bride de montage du maître-cylindre (non représenté) sur cette paroi frontale 52 du boîtier 2. Les spires d'extrémité avant du ressort 50 sont engagées sur un prolongement annulaire 51 faisant saillie vers l'arrière du support 510 et l'extrémité 54 de la dernière spire avant du ressort 50 est redressée pour s'étendre librement radialement au travers d'une ouverture oblongue 55 formée axialement dans la paroi latérale de la partie de corps avant 5 du boîtier 2. Comme représenté sur le dessin, la dernière spire arrière du ressort 50 porte axialement contre la face avant de l'élément de piston annulaire 14 en prenant appui centralement sur un prolongement tubulaire central 56 faisant saillie vers l'avant de l'élément de piston 14 positionné en butée, vers l'avant, contre un épaulement 57 faisant saillie radialement vers l'extérieur du corps de valve 15, un joint annulaire 58 étant prévu entre la périphérie de ce dernier et l'alésage central de l'élément de piston 14. La seconde cavité 20 communique radialement vers l'extérieur du corps de valve 15 par un perçage radial 59 dans lequel est monté à force un tube fendu 60 portant contre la face arrière de l'élément de piston 14 et immobilisant ainsi celui-ci sur le corps de valve 15.

Le fonctionnement du dispositif est le suivant: dans l'état normal de repos, représenté sur la figure 1, la tige d'actionnement 1 et l'organe pousseur 24 étant dans leur position extrême arrière, le second moyen de clapet 37 du plongeur 29 se trouve dégagé du siège correspondant 38 tandis que le premier moyen de clapet 36 est en butée, sous l'effet du ressort 35, contre son siège 34. La première cavité 19 est ainsi la seule zone centrale du dispositif soumise à la haute pression transmise par le tube-ressort 50 dont l'extrémité avant 54 est connectée à une source d'air comprimé, comme figuré par la flèche. La chambre avant 9 du boîtier 2 est en permanence en communication avec l'atmosphère par la fenêtre 55. La chambre arrière ou de travail 10 se trouve également en communication avec l'atmosphère par le passage radial 59 du boîtier 2, la cavité 20, le clapet ouvert 37-38, l'alésage central 30 du plongeur 29 et les ouvertures 45 et 46 du dispositif de réaction.

Le ressort 50 pousse la structure de paroi mobile 7 et le corps de valve 15 en butée arrière contre la face annulaire avant de la virole 17. Lorsqu'une poussée est exercée vers l'avant sur la tige d'actionnement 1, l'organe pousseur 24 se déplace vers la gauche (sur le dessin), amenant ainsi le siège 38 à porter contre le second moyen de clapet 37, ce qui isole la cavité 20 (et la chambre de travail arrière 10) de l'atmosphère. Un complément de déplacement vers la gauche de la tige d'actionnement 1 provoque alors, via le siège de clapet 38, un déplacement vers l'avant du plongeur 29 amenant le premier moyen de clapet 36 à s'écarter de son siège 34, ce qui établit ainsi une communication entre les cavités 19 et 20 et donc l'introduction de l'air sous pression dans la chambre de travail 10 provoquant le déplacement en assistance de la structure de paroi mobile 7 multipliant, sur la tige de sortie 39, l'effort d'entrée exercé par la tige d'actionnement 1, selon un fonctionnement en servomoteur classique. Le déplacement du plongeur 29 vers l'avant, par rapport au corps de valve 15, est limité par la venue en butée de l'épaulement 26 de l'organe pousseur 24 contre l'épaulement 23 du corps de valve, lesquels assurent par ailleurs la transmission correcte des efforts entre la tige d'actionnement 1 et la tige de sortie 39 en cas de défaut de la pression d'assistance.

## Revendications

1. Dispositif d'actionnement commandé par une pression de fluide, notamment servomoteur d'assistance au freinage, comprenant un boîtier (2) définissant une cavité intérieure divisée en une première (9) et une seconde (10) chambre par une structure de paroi mobile (7) formant piston, couplée à un organe de sortie (39) et renfermant un moyen de valve de commande (29) actionné de l'extérieur par un organe d'entrée (1) pour créer sélectivement une pression différentielle d'actionnement entre les deux chambres et déplacer ainsi la structure de paroi mobile à partir d'une position de repos, un conduit flexible d'amenée de fluide (50) au moyen de valve, relié à une source de fluide sous pression et disposé dans une desdites chambres, et un ressort de rappel à boudin (50) sollicitant la structure de paroi mobile (7) vers sa position de repos, caractérisé en ce que le ressort de rappel est constitué d'un tube élastique (50) formant ledit conduit flexible d'amenée de fluide sous pression au moyen de valve (29).

2. Dispositif selon la revendication 1, du type comprenant une chambre basse pression (9) et une chambre de travail (10), caractérisé en ce que le tube élastique formant ressort de rappel (50) est disposé dans la chambre basse pression (9).

3. Dispositif selon la revendication 2, caractérisé en ce que la structure de paroi mobile (7) comprend un élément de piston annulaire (14) relié à une partie de moyeu centrale (15) renfermant le moyen de valve (29) et à laquelle est connectée l'extrémité intérieure (49) formée par la dernière spire du tube formant ressort (50), cette dernière spire portant en appui contre une face adjacente de l'élément de piston (14).

4. Dispositif selon la revendication 3, caractérisé en ce que la partie de moyeu centrale (15) comporte une première (19) et une seconde (20) cavité décalée axialement communiquant respectivement avec l'extrémité intérieure (49) du tube (50) et avec la chambre de travail (10) et dans lesquelles est monté à coulissement un plongeur (29) formant un premier moyen de clapet (36) d'intercommunication sélective entre les deux cavités (19, 20) actionné par l'organe d'entrée (1) à l'encontre d'un ressort de rappel (35).

5. Dispositif selon la revendication 4, caractérisé en ce qu'il comprend, monté à coulissement dans la partie de moyeu centrale (15), un organe pousseur (24) connecté à l'organe d'entrée (1) et définissant, avec l'extrémité adjacente (37) du plongeur (29), un second moyen de clapet d'isolement faisant sélectivement communiquer la seconde cavité (20) avec la chambre basse pression (9).

6. Dispositif selon la revendication 5, caractérisé en ce que le plongeur (29) comporte un alésage central (30) communiquant en permanence avec la chambre basse pression (9).

7. Dispositif selon la revendication 6, caractérisé en ce qu'il comprend une tige de poussée (28) s'étendant dans l'alésage (30) du plongeur (29) et couplant l'organe pousseur (24) et l'organe de sortie (39) du dispositif.

8. Dispositif selon la revendication 7, caractérisé en ce qu'il comporte un dispositif de réaction (40, 42, 43, 41) entre l'organe de sortie (39) et la tige de poussée (28).

9. Dispositif selon l'une des revendications précédentes, dans lequel l'autre extrémité (54) du ressort creux (6) est destinée à être connectée à un circuit d'air sous pression, caractérisé en ce que ladite autre extrémité (54) prolonge la dernière spire adjacente du ressort en appui contre une extrémité (510, 52) de la chambre basse pression (9) et fait saillie hors de celle-ci sensiblement radialement au travers d'une fenêtre axiale (55) formée dans la paroi périphérique du boîtier (2).

## Claims

1. Fluid pressure-controlled actuating device, in particular a brake booster servo-motor, comprising a casing (2) defining an internal cavity divided in first (9) and second (10) chambers by a movable wall structure (7) forming a piston, coupled to an output member (39) and including a control valve means (29) actuated from outside by an input member (1) selectively to create an actuating pressure differential between the two chambers to displace thereby the movable wall structure from a rest position, a flexible conduit (50) for feeding fluid to the valve means, which conduit is connected to a fluid pressure source and disposed in one of said chambers, and a helical return spring (50) biasing the movable wall structure towards its rest position, characterized in that the return spring is comprised of a resilient tube (50) forming said flexible conduit for feeding pressure fluid to the valve means (29).

2. Device according to claim 1 of the type comprising a low-pressure chamber (9) and a work chamber (10), characterized in that the resilient tube forming the return spring (50) is disposed in the low-pressure chamber (9).

3. Device according to claim 2, characterized in that the movable wall structure (7) comprises an annular piston element (14) connected to a central hub portion (15) including the valve means (29), to which hub portion the internal extremity (49) formed by the last turn of the tube forming the spring (50), said last turn being in abutment with an adjacent face of the piston element (14).

4. Device according to claim 3, characterized in that the central hub portion (15) comprises first (19) and second (20) axially displaced cavities communicating respectively with the internal extremity (49) of the tube (50) and with the work chamber (10) and wherein a plunger (29) is slidingly mounted, the plunger forming a first valve closure means (36) for selectively communicating the two cavities (19, 20) and actuated by the input member (1) opposite to a return spring (35).

5. Device according to claim 4, characterized in that it comprises a push member (24) slidingly mounted in the central hub portion, connected to the input member (1) and defining with the adjacent extremity (37) of the plunger (29) an isolating second valve closure means selectively communicating the second cavity (20) with the low-pressure chamber (9).

6. Device according to claim 5, characterized in that the plunger (29) has a central bore (30) permanently communicating with the low-pressure chamber (9).

7. Device according to claim 6, characterized in that it comprises a push rod (28) extending into the bore (30) of the plunger (29) and coupling the push member (24) and the output member (39) of the device.

8. Device according to claim 7, characterized in that it comprises a reaction device (40, 42, 43, 41) between the output member (39) and the push rod (29).

9. Device according to any of the preceding claims, wherein the other extremity (54) of the hollow spring (6) is adapted to be connected to a pressure air circuit, characterized in that said other extremity (54) forms an extension of the adjacent last turn of the spring in abutment with an extremity (510, 52) of the low-pressure chamber (9) and projecting from the latter substantially radially through an axial window (55) formed in the peripheral wall of the casing (2).

## Patentansprüche

1. Durchmittelgesteuerte Betätigungsvorrichtung, insbesondere Hilfskraftbremsverstärker, mit einem Gehäuse (2), das einen Innenraum bildet, der in eine erste (9) und eine zweite (10) Kammer durch eine einen Kolben bildende bewegliche Wand (7) unterteilt ist, die mit einem Auslassglied (39) verbunden ist und ein Steuerventil (29) enthält, das von ausserhalb durch ein Eingangsglied (1) betätigt wird, um wahlweise eine Betätigungsdruckdifferenz zwischen den beiden Kammern zu erzeugen und auf diese Weise die bewegliche Wand aus einer Ruhestellung zu verschieben, einer flexiblen Leitung (50) zum Zuführen von Strömungsmittel zum Ventil, die an einer Druckmittelquelle angeschlossen ist und in einer der Kammern angeordnet ist, und einer Schraubenrückholfeder (50), die die bewegliche Wand (7) in ihre Ruhestellung vorspannt, dadurch gekennzeichnet, dass die Rückholfeder aus einem elastischen Rohr (50) besteht, das die flexible Leitung zum Zuführen des Druckmittels zum Ventil (29) bildet.

2. Vorrichtung nach Anspruch 1 mit einer Niederdruckkammer (9) und einer Arbeitskammer (10), dadurch gekennzeichnet, dass das die Rückholfeder (50) bildende elastische Rohr in der Niederdruckkammer (9) angeordnet ist.

3. Vorrichtung nach Anspruch 2, dadurch gekennzeichnet, dass die bewegliche Wand (7) ein ringförmiges Kolbenteil (14) aufweist, das mit einem zentralen Nabenteil (15) verbunden ist, das das Ventil (29) enthält und an dem das von der letzten Windung des Feder-Rohres (50) gebildeten inneren Ende (49) befestigt ist, wobei diese letzte Windung an einer angrenzenden Stirnseite des Kolbenteils (14) anliegt.

4. Vorrichtung nach Anspruch 3, dadurch gekennzeichnet, dass das zentrale Nabenteil (15) einen ersten (19) und einen zweiten (20) Hohlraum enthält, die axial gegeneinander versetzt sind und mit dem inneren Ende (49) des Rohres (50) bzw. der Arbeitskammer (10) in Strömungsverbindung stehen und in denen ein Plunger (29) gleitbar gelagert ist, der einen ersten Schliesskörper (36) zur wahlweisen Verbindung der beiden Kammern (19, 20) bildet, der von dem Eingangsglied (1) entgegen einer Rückholfeder (35) betätigt wird.

5. Vorrichtung nach Anspruch 4, dadurch gekennzeichnet, dass sie einen in dem zentralen Nabenteil (15) gleitend gelagerten Stössel (24) aufweist, der mit dem Eingangsglied (1) verbunden ist und zusammen mit dem angrenzenden Ende (37) des Plungers (29) Schliesskörper bildet, der wahlweise den zweiten Hohlraum (20) mit der Niederdruckkammer (9) verbindet.

6. Vorrichtung nach Anspruch 5, dadurch gekennzeichnet, dass der Plunger (29) eine zentrale Bohrung (30) aufweist, die mit der Niederdruckkammer (9) dauernd in Verbindung steht.

7. Vorrichtung nach Anspruch 6, dadurch gekennzeichnet, dass sie eine Schubstange (28) aufweist, die sich in die Bohrung (30) des Plungers (29) erstreckt und den Stössel (24) sowie das Auslassglied (39) der Vorrichtung koppelt.

8. Vorrichtung nach Anspruch 7, dadurch gekennzeichnet, dass sie eine Reaktionsvorrichtung (40, 42, 43, 41) zwischen dem Ausgangsglied (39) und der Schubstange (28) aufweist.

9. Vorrichtung nach einem der vorhergehenden Ansprüche, bei der das andere Ende (54) der hohlen Feder (6) an einem Luftdruckkreis anschliessbar ist, dadurch gekennzeichnet, dass dieses andere Ende (54) die letzte angrenzende Windung der Feder, die an einem Ende (510, 52) der Niederdruckkammern (9) anliegt, verlängert und aus dieser im wesentlich radial durch ein axiales Fenster (55) in der Umfangswand des Gehäuses (2) vorsteht.